(19) Europäisches Patentamt
European Patent Office
Office européen des brevets

(11) Publication number: 0 230 357 A2

(12) # EUROPEAN PATENT APPLICATION

(21) Application number: 87300150.7

(22) Date of filing: 08.01.87

(51) Int. Cl.[4]: C 02 F 5/10, C 02 F 5/12

(30) Priority: 10.01.86 US 818501

(43) Date of publication of application: 29.07.87 Bulletin 87/31

(84) Designated Contracting States: BE DE FR GB IT NL

(71) Applicant: BETZ EUROPE, INC., 4636 Somerton Road, Trevose Pennsylvania 19047 (US)

(72) Inventor: Wisener, Allison Torrez, 204 C Rue Chartres, Lafayette Louisiana 70508 (US)
Inventor: Peerce-Landers, Pamela J., 550 Sanatoga Road, Pottstown Pennsylvania 19464 (US)

(74) Representative: Gore, Peter Manson et al, W.P. THOMPSON & CO. Coopers Building Church Street, Liverpool L1 3AB (GB)

(54) **Method of treating an aqueous medium.**

(57) A method for treating an aqueous medium comprising aluminium species using water soluble (meth)acrylic acid type/allylhydroxy propyl sulphonate ether copolymers.

EP 0 230 357 A2

DESCRIPTION

"METHOD OF TREATING AN AQUEOUS MEDIUM".

The present invention relates to a method of treating aqueous systems and particularly for inhibiting aluminium based deposition and fouling in water systems prone to such problems.

Aluminium compounds such as, for example, alum or sodium aluminate, have been used for years as coagulant aids to help clarify influent water. These aluminium-containing materials neutralize the charge on turbidity particles in the water and hydrolyze to form insoluble precipitates which, in turn, entrap additional particles. In most cases, these large particles (flocs) settle with the aid of clarifier or like devices and are collected as sludge exiting from the clarifier sludge draw off line. Ideally, clarified effluent water flows over the top of the clarifier into a collection weir and is then ready for further water treatment processes such as, for example, filtration, softening and ion exchange, or the effluent can be used directly, without further processing, as makeup water to an operating system such as, for example, a cooling or boiler system.

Occasionally, clarifier system upsets cause the aluminium-containing flocs or particles to "carryover" or flow into the effluent collection weir. In these instances, troublesome aluminium induced deposits can form in cooling systems or boiler systems which are supplied with such aluminium-containing makeup water.

Carryover aluminium is usually in the trivalent state and may, depending on water chemistry, exist in the form of, for example, aluminium hydroxide, aluminium silicate, aluminium phosphate or aluminium sulphate. The problem may be encountered at as low as 0.5 ppm $Al^{+3}$ in the system water. Moreover, when

anionic deposit control agents, such as, for example, polyacrylates, are used in the cooling or boiler system, the available carryover $Al^{+3}$ or its hydrated $Al(OH)_3$ form or any resulting $Al^{+3}$-containing compound can interfere with the deposit control agent, thus rendering the latter incapable of performing its intended deposit control function.

Accordingly, there is a need to provide a treatment that may be effectively used to minimize water system fouling in systems experiencing the aforementioned problem of aluminium carryover.

It has now been found possible, in accordance with the present invention, to alleviate these and other problems by addition, to the requisite aluminium-containing system water, of specific water soluble acrylic acid/allylhydroxypropyl sulphonate ether copolymers (hereinafter sometimes referred to as AA/AHPSE).

In Example 3 of US-A 4500693 (Takehara, et. al.), an AA/AHPSE copolymer is reported. Polymers of the generic class encompassing such AA/AHPSE polymers are disclosed in US-A-4500693 as being useful aqueous slurry dispersants for inorganic pigments and as scale-preventing agents in cooling water systems and Table 1 therein pertains to calcium carbonate inhibition tests in which the AA/AHPSE polymer of Example 3 is tested. Additionally, AA/AHPSE copolymers have been available commercially for several years prior to US-A-4500693 and have been advertised as being effective calcium sulphate and calcium carbonate scale control agents. However, despite US-A-4500693 and the commercial availability of the copolymer, the present Applicant is not aware of any publication or use of the copolymer in system waters prone to $Al^{+3}$ based fouling.

According to the present invention there is provided a method of treating an aqueous medium comprising aluminium species, which comprises adding to the medium an effective amount of a water soluble copolymer I comprising repeat unit moieties (a) and (b) wherein repeat unit moiety (a) comprises the structure:

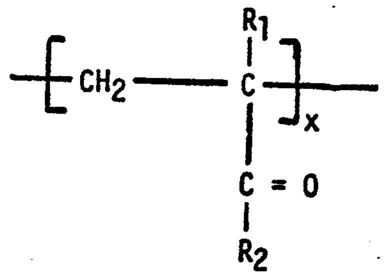

and wherein repeat unit moiety (b) comprises the structure:

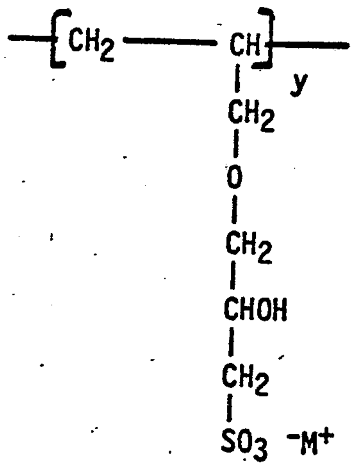

wherein x and y are integers, $R_1$ is H or alkyl of 1 to 3 carbon atoms, $R_2$ is OH, OM, or $NH_2$, M is H or a water soluble cation.

Preliminary laboratory tests under simulated cooling water conditions have indicated that AA/AHPSE copolymers are effective in controlling deposits and minimizing corrosion even in the presence of from about 0.5 ppm to 10 ppm $Al^{+3}$ (as $Al^{+3}$). Other data demonstrate that the AA/AHPSE copolymers can be used

as a "topoff" treatment in combination with known deposit control agents as an aid in abating aluminium based deposit formation and fouling after the same have already been encountered in the water system.

Although the treatment of the present invention is particularly well-suited for use in cooling water systems experiencing $Al^{+3}$ based deposit and fouling problems, it is applicable in other water system environments wherein $Al^{+3}$ is present in an amount sufficient to form deposits or interfere with the normal function of the deposit control agent of the system. Such other systems include boiler, gas cleaning, desalination and dust control systems.

Thus the present invention also provides a method which is used in a cooling water system of the type in which from about 0.1 to 500 ppm of a deposit control agent are admitted to the cooling water system and wherein $Al^{+3}$ species is present in the cooling system water in a range of from about 0.5 to 10 ppm $Al^{+3}$ (as $Al^{+3}$), the effective amount of water soluble copolymer I also being admitted to the water in an amount of from about 0.1 to 500 ppm.

The number average molecular weight (Mn) of the copolymer may be about 1,000 to 1,000,000. The only essential criterion regarding molecular weight is that the copolymer be water soluble. A preferred molecular weight ($\bar{M}n$) is about 2,000 to 10,000.

The molar ratio x:y of the repeat units may be about 30:1 to 1:20, with a molar ratio x:y of about 10:1 to 1:5 being even more preferred. The repeat unit (a) may comprise, for example, acrylic acid or water soluble salt form thereof. At present, the copolymer preferred for commercial usage is a copolymer of acrylic acid (AA)/allyl 2-hydroxypropyl sulphonate ether (AHPSE) wherein the molar ratio AA:AHPSE is 6:1 and the molecular weight ($\bar{M}n$) is about 2,000 to 6,500.

As to preparation of the (meth) acrylic acid type monomer (repeat unit (a) in the above formula), such synthetic preparatory routes are well known and do not need repeating in detail herein. Suffice it here to say that acrylic acid is commonly produced via hydrolysis of acrylonitrile or via oxidation of acrolein. Other well known vinyl-containing monomers such as, for example, methacrylic acid or acrylamide may also be utilized as repeat unit (a).

The allyl hydroxy propyl sulphonate ether monomer (AHPSE) (repeat unit (b) in the above formula) may conveniently be prepared via a ring opening reaction of the epoxy group of an allyl glycidyl ether precursor. Sulphonation of the epoxy group with sodium sulphite in the presence of a phase transfer catalyst such as, for example, tetra-n-butylammonium bisulphite or with fuming sulphuric acid containing sulphur trioxide will produce the sulphonic acid group and hydroxy group of the AHPSE. The resulting monomer can be further neutralized with caustic or other basic material. The reaction is illustrated by the following mechanism:

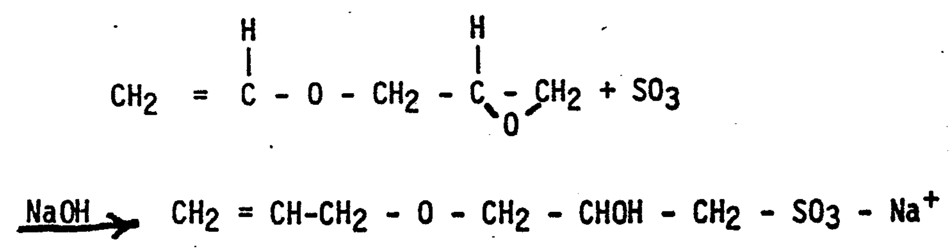


After the desired monomers have been obtained, free radical chain addition polymerization may proceed in accordance with conventional solution polymerization techniques. Polymerization initiators such as, for example, persulphate initiators, or peroxide initiators, may be used. Preferably, the requisite monomers are mixed with water and alcohol

(preferably isopropanol). The resulting polymer may be isolated by well-known methods such as, for example, distillation, or the resulting polymer may simply be used in its aqueous solution.

The copolymers should be added to the water system having $Al^{+3}$ present in the water in an effective amount for the purpose. This amount will vary depending upon the particular system for which treatment is desired and will be influenced by factors such as pH, temperature, water quantity and the concentration in the water of the troublesome $Al^{+3}$ species or compound comprising such ion.

For the most part, the copolymers will be effective when used at levels of about 0.1 to 500 parts per million parts of water, and preferably from about 1.0 to 100 parts per million of water contained in the aqueous system to be treated. The polymers may be added directly into the water system in a fixed quantity and in the state of aqueous solution continuously or intermittently.

The preferred environment for use is in cooling water systems, particularly systems wherein a clarifier upset or the like has resulted in the presence of $Al^{+3}$ or any of its resulting compounds in the system makeup source. The phrase "$Al^{+3}$ resulting compounds" as used herein refers to any compound in which the $Al^{+3}$ ion is either chemically bound or physically attached. For instance, depending upon water chemistry, pH and temperatures, such compounds could include aluminium phosphate, aluminium sulphate, sodium aluminate, alum (i.e. aluminium ammonium sulphate or aluminium potassium sulphate), aluminium silicate or aluminium hydroxide. Additionally, although the exact mechanism for aluminium induced fouling is not presently known to us, complexes or

ligands formed from $Al^{+3}$ and organic polymer deposit control agents such as, for example, the polyacrylates, may also be formed. Such ligand or complex formation is especially troublesome since the deposit control agent is not then available to provide its intended deposit control function. Such complexes or ligands are also to be included within the ambit of the phrase "$Al^{+3}$ resulting compounds". The phrase "aluminium species" encompasses both $Al^{+3}$ ions and "Al+3 resulting compounds".

As stated hereinabove, the AA/AHPSE copolymer may also be used as a "topoff" agent in combination with known deposit control agents in systems wherein Al+3 species or $Al^{+3}$ resulting compound fouling has already been encountered. In these particular applications, the AA/AHPSE copolymer may be fed to the system within the range of from about 0.1 to 500 ppm with the deposit control agent also being fed to the system within the range of about 0.1 to 500 ppm.

As to such known deposit control agents, the following are exemplary:

1) polyacrylic acid
2) polymethacrylic acid
3) sulphonated styrene/maleic anhydride copolymers
4) polyacrylamides
5) isopropenylphosphonic acid polymers and copolymers
6) acrylic acid/hydroxylated lower alkyl (1 to 6 carbon atoms) acrylate copolymers
7) diisobutylene/maleic anhydride copolymers
8) acrylic acid/acrylamido-2-methylpropane sulphonic acid copolymers.

.....................................................

CLAIMS.

1. A method of treating an aqueous medium comprising aluminium species, which comprises adding to the medium an effective amount of a water soluble copolymer I comprising repeat unit moieties (a) and (b) wherein repeat unit moiety (a) comprises the structure:

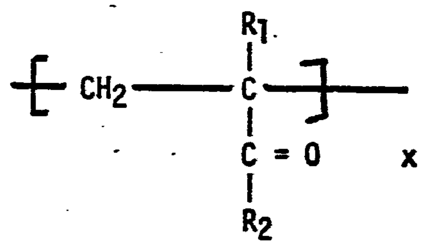

and wherein repeat unit moiety (b) comprises the structure:

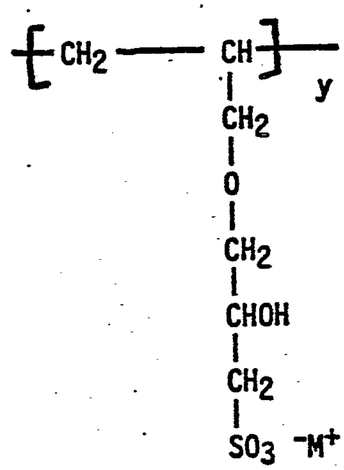

wherein x and y are integers, $R_1$ is H or alkyl of 1 to 3 carbon atoms), $R_2$ is OH, OM, or $NH_2$, M is H or a water soluble cation.

2. A method as claimed in claim 1, in which the number average molecular weight ($\bar{M}n$) of copolymer I is about 1,000 to 1,000,000.

3. A method as claimed in claim 1, in which the number average molecular weight ($\bar{M}n$) of copolymer I is about 2,000 to 10,000.

4. A method as claimed in any of claims 1 to 3, in which the molar ratio x:y is about 30:1 to 1:20.

5. A method as claimed in claim 4, in which the molar ratio x:y is about 10:1 to 1:20.

6. A method as claimed in any of claims 1 to 5, in which water soluble copolymer I is added to the aqueous medium in an amount of about 0.1 to 500 parts polymer based upon 1 million parts of the aqueous medium.

7. A method as claimed in any of claims 1 to 6, in which repeat unit (a) commprises acrylic acid or water soluble salt form thereof.

8. A method as claimed in any of claims 1 to 7, which is used for controlling deposition and fouling in an aqueous medium of the type comprising aluminium species present in the medium in an amount necessary to cause the deposition or fouling.

9. A method as claimed in any of claims 1 to 8, in which the medium is contained within a cooling water system.

10. A method as claimed in claim 9, in which the aluminium species is admitted to the cooling water system from a makeup source which has been contaminated by a clarifier upset.

11. A method as claimed in any of claims 1 to 10, which is used in a cooling water system of the type in which from about 0.1 to 500 ppm of a deposit control agent are admitted to the cooling water system and wherein $Al+3$ species is present in the cooling system water in a range of from about 0.5 to 10 ppm $Al^{+3}$ (as $Al+3$), the effective amount of water soluble copolymer I also being admitted to the water in an amount of from about 0.1 to 500 ppm.

12. A method as claimed in claim 11, in which the deposit control agent selected from polyacrylic acid, polymethacrylic acid, sulphonated styrene/maleic anhydride copolymers, polyacrylamides, isopropenylphosphonic acid polymers and copolymers, acrylic acid/hydroxylated lower alkyl (1 to 6 carbon atoms) acrylate copolymers, diisobutylene/maleic anhydride copolymers and acrylic acid/acrylamido-2-methylpropane sulphonic acid copolymers.

..................................................